# EUROPEAN PATENT SPECIFICATION

(11) **EP 0 696 389 B1**
(45) Date of publication and mention of the grant of the patent: **18.06.1997**
(21) Application number: 94913127.0
(22) Date of filing: 26.04.1994
(51) Int. Cl.: H02G 7/05

(54) **HOLDER FOR A LOW-VOLTAGE CABLE**
HALTERUNG FÜR NIEDERSPANNUNGSKABEL
SUPPORT POUR UN CABLE BASSE TENSION

(30) Priority: 27.04.1993 FI 931878
(43) Date of publication of application: 14.02.1996
(73) Proprietor: OY SEKKO AB, 06100 Porvoo (FI)
(72) Inventor: TURUNEN, Harri, FIN-07900 Loviisa (FI)
(74) Representative: Becker, Maria, Dipl.-Phys.
(86) International application number: FI9400157
(87) International publication number: WO9426012

(56) References cited:
- SE-B- 417 471

## Description

The present invention relates to a holder for a low-voltage cable, especially a convoluted overhead or suspended cable, comprising an openable sleeve consisting of a C-shaped sleeve element and a clamp element, which covers the open side of the latter and is pivotable from a position covering said open side to a position which maintains it open.

The convoluted suspended cables are generally used for voltages less than 1 kV. The convoluted suspended cable is a relatively thick cable or wire coated with a single insulation. In view of suspending such cables, the Applicant has earlier used holders of the above type employing separate rubber bushings between the openable metal sleeve and the wire. Different size wires have required different size rubber bushings in view of using the same metal casing for holding and clamping cables of varying diameters, so that the cable can be clamped in the holder also against lengthwise drawing. The use of separate rubber bushings means that the holder cannot be used as a cable drawing device. Another drawback is the large number of different size rubber bushings (as much as 15 sizes).

On the other hand, there are prior known holders suitable for cable drawing and clamping, which are fitted with rollers and a screw-tightened clamp element. However, while suitable for drawing and clamping a cable, such holders are generally not openable to facilitate the removal of a cable extending through the holder from the holder in lateral direction without having to draw the entire cable in its longitudinal direction through the holder. This is important e.g. when repairing long-distance cables.

The document SE-B-417471 discloses such a holder which is however also openable.

An object of the invention is to provide an improved holder for a low-voltage cable, which can be used for drawing and clamping a cable and which is also openable.

This object is achieved on the basis of the characterizing features set forth in the annexed claims.

One exemplary embodiment of the invention will now be described in more detail with reference made to the accompanying drawings, in which
fig. 1 shows a cable holder of the invention in the direction of the cable;
fig. 2 is a side view of the same;
fig. 3 shows separately a plastic insulation for the holder;
fig. 4 is a sectional view of the plastic insulation along a line IV-IV in fig. 5;
fig. 5 is a sectional view of the plastic insulation along a line V-V in fig. 6;
fig. 6 is a side view of the plastic insulation (from left in fig. 3);

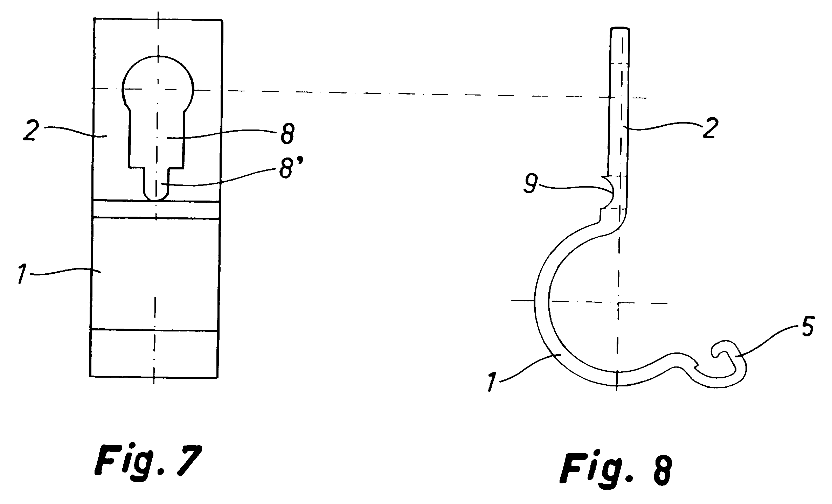

fig. 7 is a side view of a metal casing element for the holder and
fig. 8 shows the same casing element in the longitudinal direction of a cable.

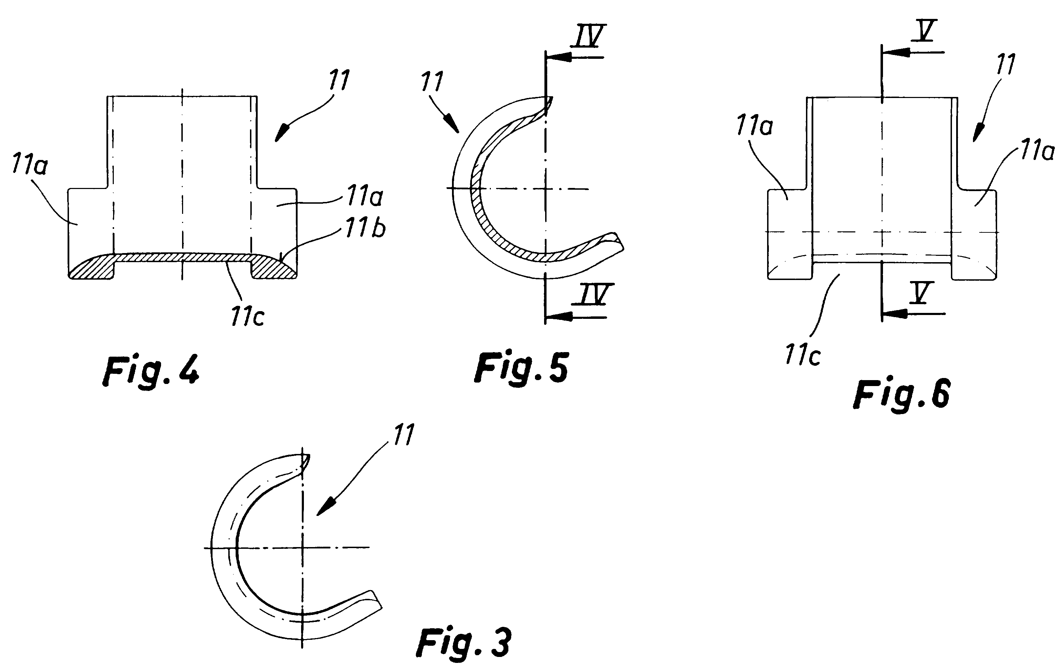

The holder includes an openable sleeve, comprising a C-shaped sleeve element 1, 11 and a clamp element 4 covering its open side. The C-shaped sleeve element includes an aluminium sleeve casing 1, whose top end is fitted with a suspension plate 2 of the same metal element and provided in turn with a suspension ring 3 for hanging the holder on a hook included in a pole or a wall. The inner surface and end faces of the sleeve casing 1 are coated with a plastic insulation 11, illustrated in more detail in figs. 3-6. The plastic material of insulation 11 must have good sliding characteristics with the plastic material of a cable insulation. In addition, the insulation 11 is provided with end faces 11b (fig. 4) having a curved shape at least over a cable-supporting section for facilitating the drawing of a sleeve-supported cable without damaging the cable insulation. In order to provide the curved end faces 11b, the plastic insulation 11 includes extended end portions 11a below its centre axis. The outer periphery of plastic insulation 11 is provided with a recess 11c for accommodating the metallic sleeve casing 1.

The clamp element 4 consists of a clamping pad 10, 12 and a closing rim 14 having one end thereof linked with a pivoting hinge 5, 5' to the bottom end of sleeve casing 1. The top end of said closing rim 14 is connectable to the suspension plate 2 by means of a releasable bayonet coupling 6-9.

Said bayonet coupling is effected in such a manner that a locking pad 7 engageable with the threading of a screw 6 can be inserted through a hole 8 in the plate 2, whereafter the screw 6 is turned into a runner 8' and the locking pad 7 is tightened into a locking groove 9.

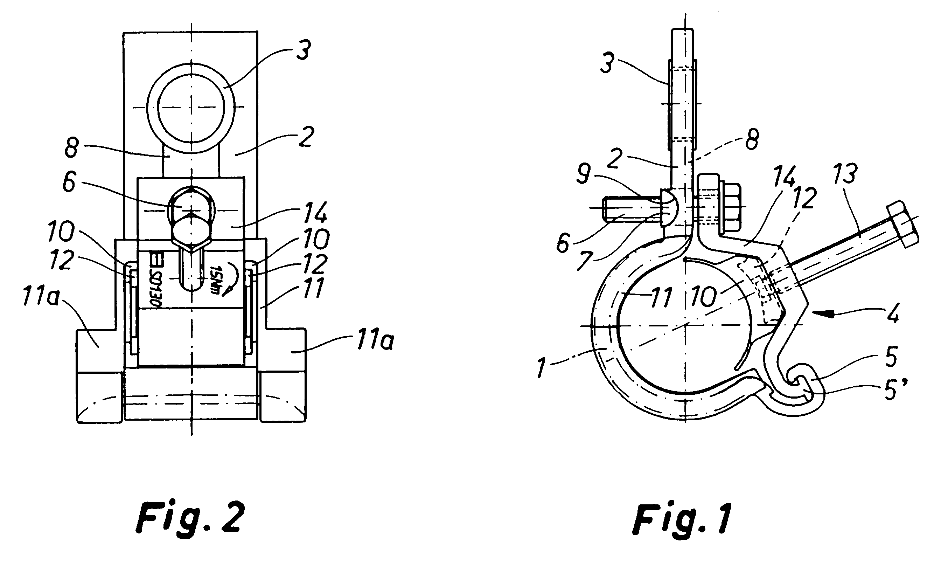

The clamping pad comprises an insulation element 10 and an aluminium element 12 embedded therein and receiving the end of a clamping screw 13 in a freely rotating fashion. The clamping screw 13 has its threading in engagement with the closing rim 14 and, thus, by turning the screw 13, said clamping pad 10, 12 can be tightened towards the interior of said C-shaped sleeve element 1, 11. In the position of fig. 1, the plastic insulation 11 and the insulation element 10 together form a sleeve of insulating material provided with a substantially cylindrical inner surface, the share of insulation element 10 thereof being substantially less than 180°. The inner sleeve surface may depart from the cylindrical shape in such a way that, at least as far as the insulation 11 is concerned, its diameter may increase slightly towards the ends of the sleeve, whereby the point of smallest diameter is at the midway point of the sleeve length.

The insulation element 10 includes a clamp surface in the shape of a partial cylinder, which substantially covers the open side of the C-shaped sleeve element 1, 11. The closing rim 14 provides a chute accommodating said clamping pad 10, 12 and guiding the alignment of clamping pad 10, 12 after pulling said clamping pad with the clamping screw 13 into said chute provided by rim 14. The insulation element 10 is provided with flexible edge portions which, if necessary, can bend towards each other as the insulation element 10 works its way into the C-shaped sleeve element 1, 11. Thus, the clamping pad 10 is afforded a substantial operating range in the clamping direction and, thus, the holder can be used for cables whose diameters vary within a wide range. The mere pivoting of closing rim 14 and tightening of its fastening screw 6 is not sufficient to achieve such variation possibilities. In practice, the closing rim 14 is intended to be tightened always in the same position and the fastening of cables of varying diameters is effected by shifting the clamping pad 10, 12 with the clamping screw 13.

## Claims

1. A holder for a low-voltage cable, especially a suspended convoluted cable, comprising an openable sleeve (1, 11; 4) consisting of a C-shaped sleeve element (1, 11) and a clamp element (4), which covers the open side of the latter and is pivotable from a position covering said open side to a position which maintains it open, **characterized** in that the inner surface and end faces of said C-shaped sleeve element (1, 11) are coated with a plastic insulation (11), whose sliding characteristics and curved shaping of its end faces (11b) allow the drawing of a cable supported by the sleeve, and that the clamp element (4) is provided with an insulation element (10) that can be tightened towards the interior of said C-shaped sleeve element (1, 11).

2. A holder as set forth in claim 1, **characterized** in that the clamp element (4) comprises a clamping pad (10, 12) and a closing rim (14) coupled with each other such that said clamping pad (10) including its insulation element (10) is connected in a freely rotating fashion to the end of a clamping screw (13) and the threading of said clamping screw (13) is in engagement with the closing rim (14), whose one end is linked with a pivoting hinge (5, 5') to one edge of the open side of said C-shaped sleeve element (1, 11) and whose other end can be fastened with a releasable bayonet coupling (6-9) to a suspension plate (2) included in the other edge of the open side of said C-shaped sleeve element (1, 11).

3. A holder as set forth in claim 1 or 2, **characterized** in that the closing rim (14) extending across the open side of said C-shaped sleeve element (1, 11) provides a chute accommodating the clamping pad (10, 12) and guiding the alignment of the clamping pad (10, 12) after pulling said clamping pad to the bottom of said chute.

4. A holder as set forth in any of claims 1-3, **characterized** in that the insulation element (10) is provided with a clamp surface in the shape of a partial cylinder.

5. A holder as set forth in claim 4, **characterized** in that the edge portions of said insulation element (10) are flexible and capable, if necessary, of bending towards each other as said insulation element (10) works its way into the C-shaped sleeve element (1, 11).

6. A holder as set forth in any of claims 1-5, **characterized** in that said plastic insulation (11) and insulation element (10) together form a sleeve of insulating material provided with a substantially cylindrical inner surface, the share of said insulation element (10) thereof being less than 180°.

## Patentansprüche

1. Halterung für ein Niederspannungskabel, insbesondere ein aufgehängtes gewundenes Kabel, wobei die Halterung eine öffenbare Manschette (1, 11; 4) aufweist, die besteht aus einem C-förmigen Manschettenelement (1, 11) und einem Klemmelement (4), das die offene Seite des Manschettenelements abdeckt und von einer Stellung, in der die offene Seite abgedeckt ist, zu einer Stellung, in der die Seite offen ist, verschwenkbar ist,
**dadurch gekennzeichnet,**
dass die Innenfläche und Endseiten des C-förmigen Manschettenelements (1, 11) mit einer Plastikisolation (11) abgedeckt sind, dessen Gleiteigenschaften und gekrümmte Form seiner Endflächen (11b) das Ziehen eines durch die Manschette gehaltenen Kabels erlaubt und dass das Klemmelement (4) mit einem Isolationselement (10) ausgerüstet ist, das in Richtung des Inneren des C-förmigen Manschettenelements (1, 11) festgezogen werden kann.

2. Halterung nach Anspruch 1, dadurch gekennzeichnet, dass das Klemmelement (4) ein Klemmkissen (10, 12) und einen Schliessbügel (14) aufweist, die miteinander gekoppelt sind, so dass das Klemmkissen (10) einschliesslich seines Isolationselements (10) rotationsfrei mit dem Ende einer Klemmschraube (13) verbunden ist, und das Gewinde der Klemmschraube (13) ist mit dem Schliessbügel (14) in Eingriff, dessen eines Ende mit einem Scharnier (5, 5') an einer Kante der offenen Seite des C-förmigen Manschettenelements (1, 11) verbunden ist und dessen anderes Ende mit einer lösbaren Bajonettkupplung (6 - 9) an eine in der anderen Kante der offenen Seite des C-förmigen Manschettenelements (1, 11) enthaltenen Trägerplatte(2) befestigbar ist.

3. Halterung nach Anspruch 1 oder 2, dadurch gekennzeichnet, dass der sich über die offene Seite des C-förmigen Manschettenelements (1, 11) erstreckende Schliessbügel (14) eine Vertiefung aufweist, die das Klemmkissen (10, 12) aufnimmt und die Ausrichtung des Klemmkissens (10, 12) bewirkt, nachdem das Klemmkissen in Richtung des Bodens der Vertiefung gezogen wird.

4. Halterung nach einem der vorhergehenden Ansprüche 1 - 3, dadurch gekennzeichnet, dass das Isolationselement (10) eine Klemmfläche aufweist, die die Form eines Teilzylinders hat.

5. Halterung nach Anspruch 4, dadurch gekennzeichnet, dass die Randbereiche des Isolationselements (10) flexibel sind und, wenn nötig, in der Lage sind, sich gegeneinander zu verbiegen, wenn das Isolationselement (10) sich in das C-förmige Manschettenelement (1, 11) eindrückt.

6. Halterung nach einem der vorhergehenden Ansprüche 1 - 5, dadurch gekennzeichnet, dass die Plastikisolation (11) und das Isolationselement (10) zusammen eine Manschette aus Isolationsmaterial bilden, die eine im wesentlichen zylindrische Innenfläche aufweist, wobei der Anteil des Isolationselements (10) weniger als 180° beträgt.

## Revendications

1. Support pour un câble basse tension, en particulier pour un câble torsadé suspendu, comprenant un manchon ouvrant (1, 11 ; 4) constitué par un élément de manchon en forme de C (1, 11) et par un élément de serrage (4) qui recouvre le côté ouvert de ce dernier et qui est susceptible de pivoter entre une position, dans laquelle il recouvre ledit côté ouvert, et une position dans laquelle il maintient ouvert celui-ci, caractérisé en ce que la surface interne et les faces frontales dudit élément de manchon en forme de C (1, 11) comportent un revêtement plastique isolant (11) dont les propriétés de glissement et la forme incurvée des faces frontales (11b) permettent le tirage d'un câble supporté par le manchon, et en ce que l'élément de serrage (4) est doté d'un élément d'isolation (10) pouvant être serré en direction de l'intérieur dudit élément de manchon en forme de C (1, 11).

2. Support selon la revendication 1, caractérisé en ce que l'élément de serrage (4) comprend un patin de serrage (10, 12) et un étrier de fermeture (14) associés l'un à l'autre de telle sorte que ledit patin de serrage (10) y compris son élément d'isolation (10) sont fixés, tout en pouvant tourner librement, à l'extrémité d'une vis de serrage (13), le filet de ladite vis de serrage (13) étant en prise avec l'étrier de fermeture (14) dont une extrémité est articulée au moyen d'une charnière pivotante (5, 5') à l'un des bords du côté ouvert dudit élément de manchon en forme de C (1, 11), son autre extrémité pouvant être fixée, par l'intermédiaire d'une attache amovible à baïonnette (6-9), à une plaque de retenue (2) que comporte l'autre bord du côté ouvert dudit élément de manchon en forme de C (1, 11).

3. Support selon l'une ou l'autre des revendications 1 et 2, caractérisé en ce que l'étrier de fermeture (14) disposé en travers du côté ouvert dudit élément de manchon en forme de C (1, 11) comporte un dégagement dans lequel se loge le patin de serrage (10, 12) et qui assure le guidage rectiligne du patin de serrage (10, 12) lorsque ledit patin de serrage est entraîné au fond dudit dégagement.

4. Support selon l'une quelconque des revendications 1 à 3, caractérisé en ce que l'élément d'isolation (10) comporte une surface de serrage ayant la forme d'une portion de cylindre.

5. Support selon la revendication 4, caractérisé en ce que les bords dudit élément d'isolation (10) sont flexibles et peuvent, si nécessaire, se recourber l'un vers l'autre lorsque ledit élément d'isolation (10) se déplace vers l'intérieur de l'élément de manchon en forme de C (1, 11).

6. Support selon l'une quelconque des revendications 1 à 5, caractérisé en ce que ledit revêtement plastique isolant (11) et ledit élément d'isolation (10) forment ensemble un manchon en matériau isolant doté d'une surface interne essentiellement cylindrique, dont ledit élément d'isolation (10) représente une portion angulaire inférieure à 180°.
